# EUROPEAN PATENT APPLICATION

(11) **EP 4 484 388 A1**
(43) Date of publication of application: **01.01.2025**
(21) Application number: 24183499.3
(22) Date of filing: 20.06.2024
(51) Int. Cl.: C03B 37/012

(54) **METHOD OF DRAWING AN OPTICAL FIBER**

(30) Priority: 30.06.2023 IN 202311043994
(71) Applicant: Sterlite Technologies Limited, Gurugram, Haryana 122102 (IN)
(72) Inventor: MUNIGE, Srinivas Reddy, 122102 Haryana (IN); BALAKRISHNAN, Ranjith, 122102 Haryana (IN); PANDEY, Anand Kumar, 122102 Haryana (IN)
(74) Representative: Valet Patent Services Limited

(57) **Abstract**

The present disclosure relates to a method (300) for drawing an optical fiber (101) having step of stacking (302) at least two glass sub-preforms of a plurality of glass sub-preforms (114a-114n) inside a hollow cylindrical glass tube (108) to form a master glass preform (130) and melting (304) the bottom end (134) of the master glass preform (130) in a furnace (110) to continuously draw an optical fiber (101). In particular, the at least two glass sub-preforms are stacked in such that the master glass preform has a top end (132) and a bottom end (134) and each of the glass sub-preforms is defined by a first end (126) and a second end (128). Further, the first end (126) of a successive glass sub-preform is stacked on the second end (128) of a previous glass sub-perform such that the successive glass sub-preform rests on the previous glass sub-preform.

## Description

### TECHNICAL FIELD

Embodiments of the present disclosure relate to the field of telecommunication fiber, and more particularly, relates to an optical fiber drawing apparatus and a method thereof.
This application claims the benefit of Indian Application No. "202311043994" titled "OPTICAL FIBER DRAWING APPARATUS AND METHOD THEREOF" filed by the applicant on 30 June 2023, which is incorporated herein by reference in its entirety.

### Background Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information

Increasing demand of high-speed optical fiber communication has subsequently increased the density of optical fiber networks, which has led to a larger problem of accommodation of the optical fiber cables. Optical fibers are usually drawn from a glass preform (a cylindrical blank made up of glass). Currently, multiple glass preforms are joined together using oxy hydrogen or propane burner to form a large size glass preform and drawn in a draw furnace. If the multiple glass preforms are not joined together, there is an increase in time during the optical fiber drawing process generally because of a preform changeover time.

The preform changeover time involves removing the glass preform, cleaning the draw furnace, inserting new glass preform. To reduce the steps of drawing the optical fiber, the preforms are joined together. Conventional techniques face major problem during drawing of this large size glass preform i.e., multiple joined glass preforms. Whenever the large size glass preform is drawn, there is sudden increase in bare fiber diameter near the preform joint between two adjacent preforms. This stuck the die that controls the coating diameter of the optical fiber and the optical fiber breaks. This sudden change in bare fiber diameter near the preform joint is due to the presence of high concentration of hydroxyl ion (OH) diffused during glass joining process and significantly alter the glass properties such as viscosity, stress, attenuation, etc.

Prior art reference US20220286204A1 discloses stacking of multiple rods inside cladding tubes which is done using a generic rod in cylinder (RIC) process.

Another prior art reference US7641969B2 discloses assembling of the optical fiber preform by inserting core rod segments axially end to end inside of a first glass overclad tube.

The conventional process of drawing optical fibers involves joining multiple glass preforms, causing challenges during the drawing process, especially in large-sized preforms. The drawbacks has an abrupt increase in bare fiber diameter near preform joints due to hydroxyl ion (OH) diffusion during glass joining. This adversely affects glass properties, leading to breakage and increased preform changeover time.

Current methods, such as US20220286204A1 and US7641969B2, utilize stacked rods or tubes to form preforms, but they face limitations in achieving a continuous draw process without breaks. Diffusion of impurities in core regions during stacking of lower Old ratio rods or tubes is a significant challenge, impacting optical performance of the drawn optical fiber.

Further, there are a number of drawbacks of the conventional techniques in the above stated prior arts such as multiple clad tubes or a single tube, which is costly, in which core rods are inserted to achieve the required optical performance (such as attenuation, waveguide parameters) of the optical fiber. By stacking of core rods in one or more clad tubes in prior methods limits the overall size of the preform and the overall length of the fiber which can be drawn continuously without break during the draw process. When core rods or glass rods having lower value of ratio of clad portion diameter (D) to the core portion diameter (d) (D/d) are stacked in one or more tubes, there is very high chances of diffusion of impurities in the core regions and subsequently an increase in concentration of OH ions.

There is a pressing need for an efficient method to manufacture large-sized preforms that overcomes the challenges of abrupt diameter changes near joints, thereby ensuring a continuous and reliable optical fiber drawing process. Accordingly, to overcome the disadvantages of the prior art, there is an urgent need for a technical solution that overcomes the above-stated limitations in the prior arts by providing an efficient and effective way to manufacture a large-sized preform.

The proposed method introduces an approach by stacking glass sub-preforms inside a hollow cylindrical glass tube. This innovative technique addresses the issues associated with OH diffusion, allowing for continuous drawing at a high furnace temperature, surpassing the limitations of prior methods. Beyond overcoming existing challenges, the method offers advantages such as improved continuity, reduced preform changeover time, and enhanced control over core and clad dimensions, control over impurities diffusion, leading to a more efficient and cost-effective optical fiber drawing process.

### SUMMARY OF THE DISCLOSURE

Embodiments of the present disclosure relates to a method for drawing an optical fiber comprising steps of stacking at least two glass sub-preforms of a plurality of glass sub-preforms inside a hollow cylindrical glass tube to form a master glass preform such that the master glass preform comprises a top end and a bottom end and melting the bottom end of the master glass preform in a furnace to draw an optical fiber continuously at the temperature of at least 1650° C. In particular, each of the at least two glass sub-preforms is defined by a first end and a second end. Moreover, the first end of a successive glass sub-preform is stacked on the second end of a previous glass sub preform such that the successive glass sub-preform rests on the previous glass sub-preform.

According to the first aspect of the present disclosure, each of the at least two glass sub-preforms has a solid cylindrical shape such that each of the at least two glass sub-preforms has a clad diameter (D) and a core diameter (d), where a ratio of the clad diameter (D) to the core diameter (d) is greater than 8.

According to the second aspect of the present disclosure, the hollow cylindrical glass tube is made up of a silica material with greater than 0.1% metallic impurity and one or more glass core and one or more glass cladding is made of silica with less than 0.1% metallic impurity.

According to the third aspect of the present disclosure, the hollow cylindrical glass tube (108) is made up of a type 2 silica material and each of the at least two glass sub-preforms is made up of a type 3 silica material.

According to the fourth aspect of the present disclosure, the method includes forming the master glass preform, collapsing the at least two glass sub-preforms of the plurality of glass sub-preforms and the hollow cylindrical glass tube in the furnace.

According to the fifth aspect of the present disclosure, the method includes mating portion at the second end of the previous glass sub-preform and the first end of the successive glass sub-preform has a hydroxide (OH) infusion of less than 1 parts per million (ppm).

According to the sixth aspect of the present disclosure, to form the at least two glass sub-preforms comprising depositing a cladding layer of a silica soot on a core rod by way of an outside vapor deposition (OVD) technique to form a soot preform; and sintering the soot preform in a sintering furnace to manufacture each of the at least two glass sub-preforms.

According to the seventh aspect of the present disclosure, to form the at least two glass sub-preforms comprises stacking one or more core rods inside one or more cladding tubes to form a glass sub-preform assembly; and collapsing the glass sub-preform assembly to form the at least two glass sub-preforms.

According to the eighth aspect of the present disclosure, the optical fiber has an outer glass diameter that is in a range between 60 microns (µm) and 125 µm with a tolerance value of ± 0.7 µm.

According to the ninth aspect of the present disclosure, the optical fiber comprises a core region, a primary cladding region, and a secondary cladding region. The core radius of the core region is in a range between 4 µm and 5 µm, a primary cladding radius of the primary cladding region is in a range between 20 µm and 55 µm, and a secondary cladding radius of the secondary cladding region is in a range between 30 µm and 63 µm. Moreover, the optical fiber is defined by a relative refractive index profile such that an interface of the primary cladding region and the secondary cladding region has an abrupt change in a relative refractive index.

The core region is formed from one of, (i) un-doped silica material, (ii) a co-doped silica material, and (iii) an up-doped silica material.

the primary cladding region (404) comprising a cladding relative refractive index profile that has at least one down doped region disposed on one of, (i) an inner region and (ii) an outer region.

The hollow cylindrical glass tube has a tube length (L1) that is in a range between 5 meters (m) and 10 m, an outer diameter (D1) that is in a range between 100 millimeters (mm) and 200 mm, and an inner diameter (D2) that is in a range between 70 mm and 180 mm, where each of the at least two glass sub-preforms has a preform length (L2) that is in a range between 1 m and 3 m and a clad diameter (D) is in a range between 65 mm and 175 mm.

According to the tenth aspect of the present disclosure, the second end of the previous glass sub-preform and the first end of the successive glass sub-preform are of a flat circular shape.

The foregoing objectives of the present disclosure are attained by providing an optical fiber drawing apparatus and a method thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a schematic diagram illustrating an optical fiber drawing apparatus in accordance with an embodiment of the present disclosure;
Fig. 2 is a flowchart illustrating a method for manufacturing a glass sub-preform in accordance with an embodiment of the present disclosure;
Fig. 3 is a flowchart illustrating a method for drawing the optical fiber. in accordance with an embodiment of the present disclosure;
Fig. 4 is a pictorial snapshot illustrating a cross-sectional view of the optical fiber in accordance with an embodiment of the present disclosure;
Fig. 5 is a pictorial snapshot illustrating an exemplary representation of the relative refractive index profile in accordance with an embodiment of the present disclosure.

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

Term "optical fiber" as used herein refers to a light guide medium that provides high-speed data transmission. The light moving through the glass core region of the optical fiber relies upon the principle of total internal reflection, where the glass core region has a higher refractive index (n1) than the refractive index (n2) of the cladding region of the optical fiber.

Term "draw, drawing, drawn" with context to the optical fiber as used herein refers to obtainment of the optical fiber from a multi-layer, pure glass cylinder, called as a glass preform. The glass preform is hung at a top end of a furnace and inserted inside the furnace at a predefined preform feed speed. Further, the glass preform is melted until the glass flows under a low pulling tension. A draw capstan pulls the optical fiber from the bottom of the glass preform in the furnace, while the glass preform feed drive above the furnace maintains material flow equilibrium through the furnace. The glass fiber is cooled, coated in protective polymers, cured under ultraviolet lights, and wound onto spools.

Term "glass preform" as used herein refers to a rod/solid body of glass that is melted and drawn to form an optical fiber. The cylindrical glass preform is designed to have the desired refractive index profile for the optical fiber.

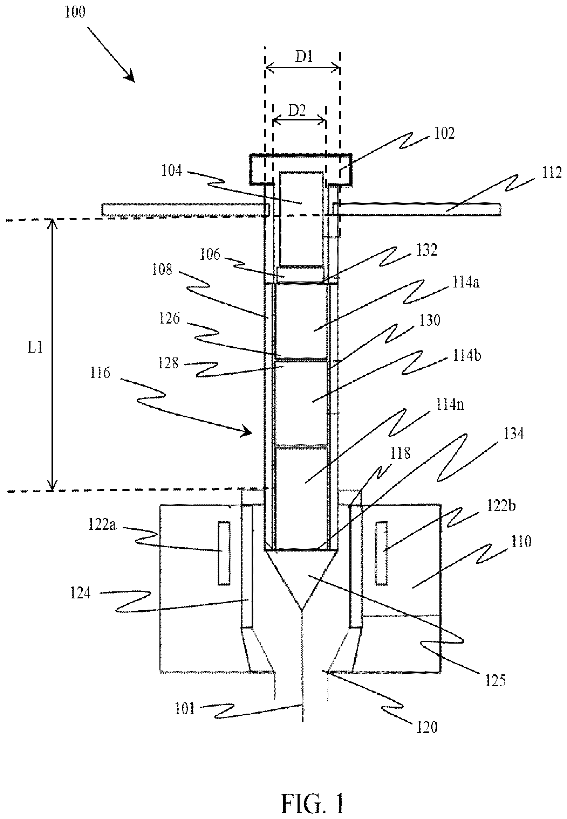

Fig. 1 is a schematic diagram illustrating an optical fiber drawing apparatus in accordance with an embodiment of the present disclosure. The apparatus 100 may be adapted to facilitate drawing of long length (in kilometers) optical fiber i.e., an optical fiber 101 in an online process and in an offline process. The optical fiber 101 that may be drawn from the apparatus 100 such that the optical fiber 101 may be in compliance with ITU standard. In particular, the apparatus 100 may be adapted to manufacture a large sized glass preform that may be formed in both the online process and the offline process. In the online process, the large sized glass preform may be formed in a draw furnace and in an immediate subsequent step, the optical fiber 101 may be drawn from the large sized glass preform. Moreover, complete volume of the large sized glass preform may be drawn without any break in the optical fiber. In the offline process, the large sized glass preform may be formed in a separate furnace and then the large sized glass preform may be transferred in the draw furnace for drawing the optical fiber.

In accordance with an embodiment of the present disclosure, the optical fiber 101 may have an outer glass diameter that may be in a range between 60 microns (µm) and 125 µm with a tolerance value of ± 0.7 µm.

The apparatus 100 may comprise a vacuum pump 102, a holding tube 104, a spacer plate 106, a hollow cylindrical glass tube 108, a furnace 110, and a handle holder 112. In particular, hollow cylindrical glass tube 108 may have a plurality of glass sub-preforms 114a-114n (hereinafter collectively referred to and designated as "the glass sub-preforms 114"). Further, the furnace 110 may have a first opening 118, a second opening 120, a pair of induction coils 122a and 122b (hereinafter collectively referred to and designated as "the induction coils 122"), a susceptor 124, and a collapsed region 125.

In accordance with an embodiment of the present disclosure, the vacuum pump 102 may be disposed at an upper side of the hollow cylindrical glass tube 108 of the apparatus 100. Further, the vacuum pump 102 may be adapted to create vacuum in the hollow cylindrical glass tube 108 from the upper side of the hollow cylindrical glass tube 108.

In accordance with an embodiment of the present disclosure, the holding tube 104 holds the core rods and spacer plate in place under the application of vacuum. If the holding tube is not there, then there are chances that the core rods will move up under application of vacuum.

In accordance with an embodiment of the present disclosure, the spacer plate 106 may be disposed between the holding tube 104 and one of the glass sub-preforms 114. In particular, the spacer plate 106 has a plurality of grooves and is placed over the hollow cylindrical tube and glass sub-preforms 114. Further, the plate acts as air passage to suck the air present between core rods and sub preforms.

In accordance with an embodiment of the present disclosure, the handle holder 112 may be used to lift the entire assembly (i.e., master glass preform assembly 116) and insert it inside furnace 110 vertically.

The hollow cylindrical glass tube 108 may hold the glass sub-preforms 114. In other words, the glass sub-preforms 114 may be inserted in the hollow cylindrical glass tube 108.

In accordance with an embodiment of the present disclosure, each glass sub-preform of the glass sub-preforms 114 may have a first end 126 and a second end 128. In particular, the glass sub-preforms 114 may be stacked on one above the other to form a master glass preform 130. Moreover, the glass sub-preforms 114 and the hollow cylindrical glass tube 108 may together form a master glass preform assembly 116. Further, the master glass preform 130 may have a top end 132 positioned near to the upper side of the hollow cylindrical glass tube 108 and a bottom end 134 positioned near to a lower side of the hollow cylindrical glass tube 108. Furthermore, the first end 126 of a successive glass sub-preform of the glass sub-preforms 114 may be stacked on the second end 128 of a previous glass sub-preform of the glass sub-preforms 114 such that the successive glass sub-preform of the glass sub-preforms 114 rests on the previous glass sub-preform of the glass sub-preforms 114.

The term "successive" as used herein context of the glass sub-preform refers to a glass sub-preform that lies on above side in the hollow cylindrical glass tube 108 and away from the furnace 110. The term "previous" as used herein context of the glass sub-preform refers to a glass sub-preform that lies on below side in the hollow cylindrical glass tube 108 and near to the furnace 110.

In an exemplary example, the first end 126 of the glass sub-preform 114a of the glass sub-preforms 114 may be stacked on the second end 128 of the glass sub-preform 114b of the glass sub-preforms 114 such that the glass sub-preform 114a of the glass sub-preforms 114 rests on the glass sub-preform 114b of the glass sub-preforms 114.

In some aspects of the present disclosure, each glass sub-preform of the glass sub-preforms 114 may be made up of a type 3 silica material produced by burning SiCl4 in a hydrogen-oxygen flame. Aspects of the present disclosure are intended to include and/or otherwise cover any type of known and later developed material for each glass sub-preform of the glass sub-preforms 114, without deviating from the scope of the present disclosure.

In accordance with an embodiment of the present disclosure, a mating portion at the second end 128 of the previous glass sub-preform and the first end 126 of the successive glass sub-preform has negligible hydroxide (OH) ion. In particular, hydroxide (OH) infusion of less than or equal to 1 parts per million (ppm). For example, the mating portion at the second end 128 of the glass sub-preform 114b of the glass sub-preforms 114 and the first end 126 of the glass sub-preform 114a of the glass sub-preforms 114 has negligible hydroxide (OH) ion.

In accordance with an embodiment of the present disclosure, the second end 128 of the previous glass sub-preform and the first end 126 of the successive glass sub-preform are of a flat circular shape.

In accordance with an embodiment of the present disclosure, the hollow cylindrical glass tube 108 may be made up of a type 2 silica material or a type 2 quartz material. The type 2 silica and/or type 1 silica material may be a low-quality silica material that may act as an outer cladding. Since, the type 2 silica and/or type 1 silica material is the low-quality silica material, therefore, cost for manufacturing the hollow cylindrical glass tube 108 may be advantageously reduced and overall glass volume may be advantageously increased. The type 2 silica and type 1 silica material may be produced by fusing quartz crystal powder in a high temperature flame.

In accordance with an embodiment of the present disclosure, the hollow cylindrical glass tube 108 may have very less thickness that negligibly affects optical properties of the glass sub-preforms 114. Aspects of the present disclosure are intended to include and/or otherwise cover any type of known and later developed material for the hollow cylindrical glass tube 108, without deviating from the scope of the present disclosure.

The hollow cylindrical glass tube 108 may be inserted into the furnace 110. In particular, the bottom end 134 may be inserted into the collapsed region 125 through the first opening 118 of the furnace 110.

In accordance with an embodiment of the present disclosure, each glass sub-preform of the glass sub-preforms 114 may have a solid cylindrical shape. Each glass sub-preform of the glass sub-preforms 114 may have a glass cladding formed of one or more cladding layers and one or more glass cores. The glass cladding of each glass sub-preform may have a clad diameter (D) and the glass core of each glass sub-preform may have a core diameter (d) such that a ratio of the clad diameter (D) to the core diameter (d) may be greater than 8. Particularly, the ratio of the clad diameter (D) to the core diameter (d) may be kept greater than 8 to prevent reaching of impurities up to the core that may be diffused in the clad. The one or more glass cores and the one or more glass cladding may be made up of silica with less than 0.1 % metallic impurity.

In accordance with an embodiment of the present disclosure, the clad diameter (D) may be in a range between 65 mm and 175 mm.

In accordance with an embodiment of the present disclosure, each glass sub-preform of the glass sub-preforms 114 may have a preform length that may be in a range between 1 meter (m) and 3 m.

In accordance with an embodiment of the present disclosure, the hollow cylindrical glass tube 108 may have a tube length (L1) that may be in a range between 5 m and 10 m, an outer diameter (D1) that may be in a range between 100 millimeters (mm) and 200 mm and an inner diameter (D2) that may be in a range between 70 mm and 180 mm. Aspects of the present disclosure are intended to include and/or otherwise cover any value of the tube length (L1), the outer diameter (D1), the inner diameter (D2).

In accordance with an embodiment of the present disclosure, the hollow cylindrical glass tube 108 may have a glass cladding (i.e., secondary clad). The hollow cylindrical glass tube 108 may be made up of a silica material with greater than 0.1% of metallic impurity.

In accordance with an embodiment of the present disclosure, the furnace 110 may be disposed below the hollow cylindrical glass tube 108. The first opening 118 may be disposed above the second opening 120 such that the first opening 118 aligns with the second opening 120. The collapsed region 125 may lie within the first opening 118. The induction coils 122 may be disposed near to the first opening 118. The susceptor 124 may extend from the first opening 118 to the second opening 120. The furnace 110 may be adapted to melt the bottom end 134 of the master glass preform 130. In particular, the induction coils 122 of the furnace 110 may be adapted to produce heat in the furnace. The induction coils 122 may be adapted to provide induction heating to the bottom end 134 of the master glass preform 130. The susceptor 124 may facilitate proper heating of the bottom end 134 of the master glass preform 130. In some aspects of the present disclosure, the at least two glass sub-preforms of the plurality of glass sub-preforms 114 and the hollow cylindrical glass tube 108 which forms the master glass preform assembly 116 may be collapsed in the furnace 110 to form the master glass preform 130. Specifically, the master glass preform assembly 116 may be collapsed in the collapsed region 125 of the furnace. The collapsing may facilitate fusion/binding of the at least two glass sub-preforms of the glass sub-preforms 114. Further, the bottom end 134 of the master glass preform 130 may be collapsed in the collapsed region 125 while the induction coils 122 melts the bottom end 134. The collapsing of the bottom end 134 may be facilitated by virtue of creation of vacuum inside the hollow cylindrical glass tube 108 through the vacuum pump 102. The collapsing may be accelerated by the vacuum inside the hollow cylindrical glass tube. The bottom end 134 of the cylindrical glass tube 108 may be converted into a conical shape so that the glass sub-preforms rests near the conical shape of the cylindrical glass tube 108. The optical fiber 101 may be continuously drawn from the bottom end 134 upon heating the bottom end 134. The optical fiber 101 may be continuously drawn out from the second opening 120 of the furnace 110. Upon drawing the optical fiber 101 from the second opening 120, the optical fiber 101 may be cured by ultra-violet radiation (UV radiation). The optical fiber 101 with coatings may be cured by a UV curing system. The UV curing system may use UV radiation to cure one or more coatings and color codes on the optical fiber 101 to protect the optical fiber 101 from cracking. Thus, the UV curing system may advantageously make the optical fiber 101 resistant to abrasion and scratches. Upon curing, the optical fiber 101 may be winded on a take-up spool.

In accordance with an embodiment of the present disclosure, the first and second openings 118 and 120 may have a cylindrical shape. Aspects of the present disclosure are intended to include and/or otherwise cover the first and second openings 118 of any shape, without deviating from the scope of the present disclosure.

In accordance with an embodiment of the present disclosure, the first and second openings 118 and 120 may have irises that may be adapted to change a diameter of the first and second openings 118 and 120.

In accordance with an embodiment of the present disclosure, each induction coil of the induction coils 122 may be a high-voltage electric element.

In accordance with an embodiment of the present disclosure, the susceptor 124 may be made up of a material, including but not limited to, graphite. Aspects of the present disclosure are intended to include and/or otherwise cover any type of known and later developed material, without deviating from the scope of the present disclosure.

In accordance with an embodiment of the present disclosure, the furnace 110 may be kept at a temperature that may be in a range between 1500° C and 1800° C. In alternative aspects of the present disclosure, the furnace 110 may be kept at a temperature that may be 1650° C. In some other aspects of the present disclosure, the furnace 110 may be kept at a temperature above than 1900 ° C, where the bottom end 134 may be softened and elongated with a teardrop-shaped drip. This teardrop-shaped drip may be pulled to draw the optical fiber 101 from the second opening 120 of the furnace 110.

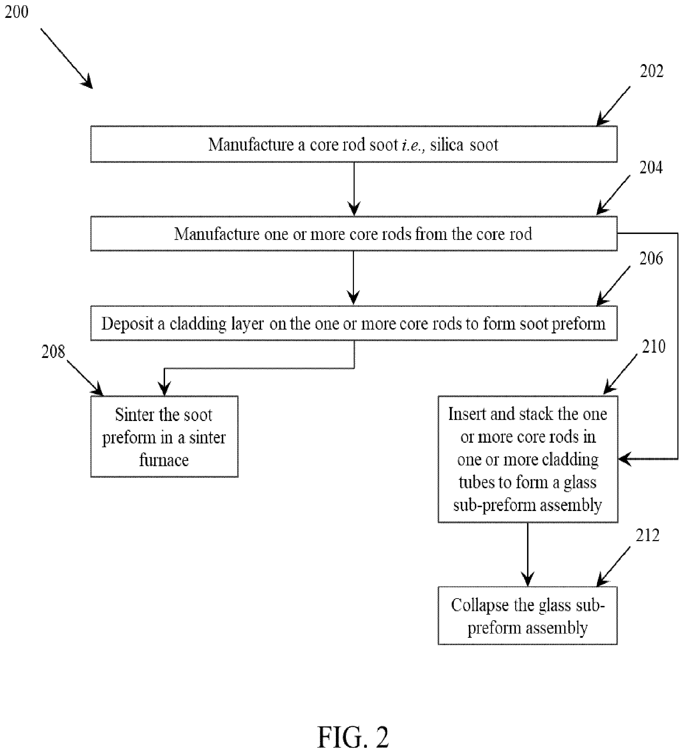

Fig. 2 is a flowchart illustrating a method for manufacturing a glass sub-preform in accordance with an embodiment of the present disclosure. In particular, each glass sub-preform of the glass sub-preforms 114 may be manufactured without welding. The method 200 may include following steps for manufacturing of one of the glass sub-preform of the glass sub-preforms 114.

At step 202, a core rod soot i.e., a silica soot is manufactured through one of, outside vapor deposition (OVD) technique, vapor axial deposition (VAD), modified chemical vapor deposition (MCVD), and the like. During manufacturing of the core rod soot by the OVD technique in an OVD machine, silica vapors may be deposited over a rotating mandrel. In some aspects of the present disclosure, the silica vapors may have a plurality of dopants. Aspects of the present disclosure are intended to include and/or otherwise cover any type of technique for manufacturing of the core rod soot.

At step 204, one or more core rods (hereinafter collectively referred to as "the core rods") are manufactured from the core rod soot. In particular, the core rod soot may be sintered and soaked to manufacture the core rods. Upon deposition of the silica vapors on the rotating mandrel, the rotating mandrel may be pulled out from the OVD machine such that the deposited silica vapors may be sintered and collapsed in a sintering furnace and soaked in a soaking furnace. The soaked silica glass may be drawn into the core rods in a draw furnace.

At step 206, each core rod of the core rods is deposited with a cladding layer (i.e., primary clad) to form a soot preform. In particular, each core rod of the core rods may be deposited with the cladding layer of the silica soot. Moreover, core rod of the core rods may be deposited by way of an outside vapor deposition (OVD) technique to form the soot preform.

At step 208, the soot preform may be sintered in a sintering furnace. In particular, the soot preform may be sintered in the sintering furnace to manufacture each glass sub-preform of the glass sub-preforms 114.

At step 210, instead of the steps 206 and 208, the core rods may be inserted and stacked inside one or more cladding tubes to form the glass sub-preforms 114. The glass sub-preforms 114 and the hollow cylindrical glass tube 108 may together form the master glass preform assembly 116. Each cladding tube of the one or more cladding tubes may be a primary clad silica tube.

At step 212, after step 210 i.e., upon the core rods being inserted inside the one or more cladding tubes, the glass sub-preform assembly 116 may be collapsed to form each glass sub-preform of the glass sub-preforms 114. In particular, upon collapsing, each glass sub-preform of the glass sub-preforms 114 may be formed. Moreover, each glass sub-preform of the glass sub-preforms 114 may be formed such that a core rod of the core rods may be surrounded by the primary clad. Further, the glass sub-preforms 114 may then be inserted into the hollow cylindrical glass tube 108 to form the master glass preform 130.

The method 200 as described hereinabove may be used to manufacture any number of glass sub-preforms i.e., the method 200 may be used to manufacture the glass sub-preforms 114.

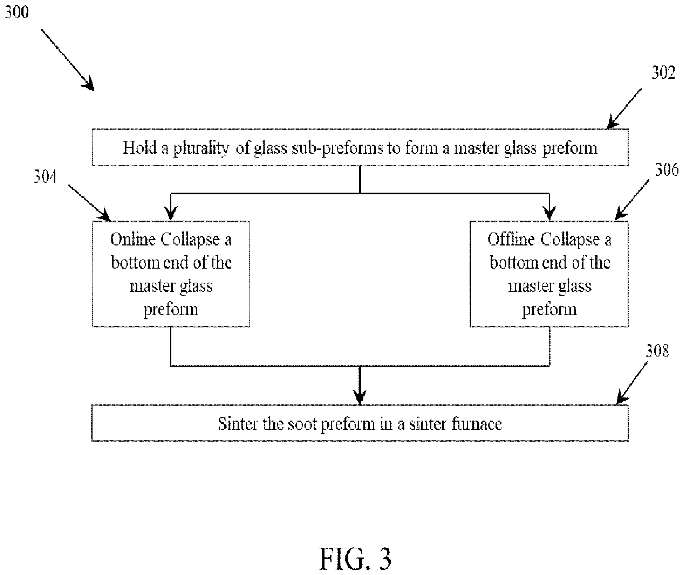

Fig. 3 is a flowchart illustrating a method for drawing the optical fiber. in accordance with an embodiment of the present disclosure.The method 300 may include following steps to draw the optical fiber 101.

At step 302, the apparatus 100, by way of the hollow cylindrical glass tube 108, may be adapted to hold the glass sub-preforms 114. Alternatively, glass sub-preforms 114 may be inserted in the hollow cylindrical glass tube 108. The glass sub-preforms 114 may be stacked on one above the other to form the master glass preform 130. The top end 132 may be positioned near to the upper side of the hollow cylindrical glass tube 108 and the bottom end 134 may be positioned near to a lower side of the hollow cylindrical glass tube 108. In particular, the first end 126 of a successive glass sub-preform of the glass sub-preforms 114 may be stacked on the second end 128 of a previous glass sub-preform of the glass sub-preforms 114 such that the successive glass sub-preform of the glass sub-preforms 114 rests on the previous glass sub-preform of the glass sub-preforms 114. The term "successive" as used herein context of the glass sub-preform refers to a glass sub-preform that lies on the above side in the hollow cylindrical glass tube 108 and away from the furnace 110. The term "previous" as used herein context of the glass sub-preform refers to a glass sub-preform that lies on the bottom side in the hollow cylindrical glass tube 108 and near to the furnace 110.

At step 304, the apparatus 100, by way of the furnace 110, the bottom end 134 may have collapsed online or melted. The apparatus 100, by way of the furnace 110, may be adapted to perform online collapsing of the bottom end 134 of the master glass preform 130. In particular, the induction coils 122 of the furnace 110 may be adapted to produce heat in the furnace. Moreover, induction coils 122 may be adapted to provide induction heating to the bottom end 134 of the master glass preform 130. Further, the susceptor 124 may facilitate proper heating of the bottom end 134 of the master glass preform 130. The master glass preform assembly 116 may be collapsed in the collapsed region 125 of the furnace. Furthermore, the bottom end 134 of the master glass preform 130 may be collapsed in the collapsed region 125 while the induction coils 122 melts the bottom end 134. The collapsing of the bottom end 134 may be facilitated by virtue of the creation of vacuum inside the hollow cylindrical glass tube 108 through the vacuum pump 102.

At step 306, instead of the step 304, the bottom end 134 of the master glass preform 130 may be collapsed offline. In particular, the master glass preform 130 may have a core, a primary clad, and a secondary clad.

At step 308, the optical fiber 101 may be continuously drawn from the bottom end 134 upon heating the bottom end 134. In particular, the optical fiber 101 may be drawn with type 1 primary clad and type 2 secondary clad.

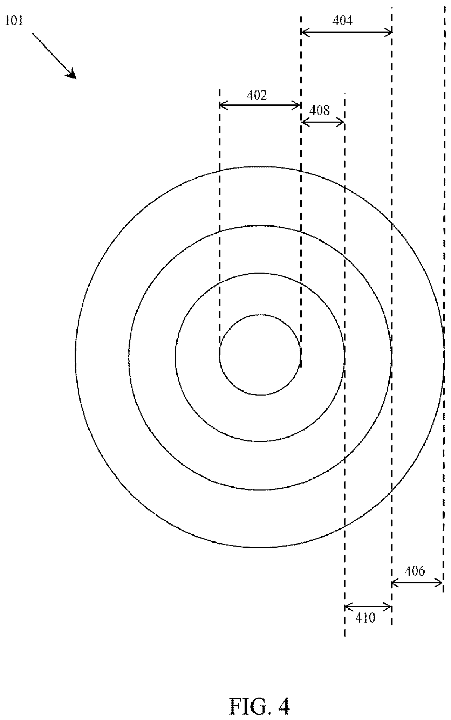

Fig. 4 is a pictorial snapshot illustrating a cross-sectional view of the optical fiber in accordance with an embodiment of the present disclosure. In particular, the optical fiber 101 may have a core region 402, a primary cladding region 404, a secondary cladding region 406. Moreover, the core region 402 may have a core radius that may be in a range between 4 µm and 5 µm. Further, the primary cladding region 404 may have a primary cladding radius that may be in a range between 30 µm and 55 µm and the secondary cladding region 406 may have a secondary cladding radius that may be in a range between 40 µm and 63 µm.

In accordance with an embodiment of the present disclosure, the core region 402 may be formed from a material, including but not limited to, un-doped silica, co-doped silica, and up-doped silica. Aspects of the present disclosure are intended to include and/or otherwise cover any type of known and later developed materials for the core region 402, without deviating from the scope of the present disclosure.

In accordance with an embodiment of the present disclosure, the primary cladding region 404 may have at least two cladding layers 408 and 410 formed of a silica material such that at least one of the at least two cladding layers 408 and 410 may be one of, (i) up-doped, (ii) down-doped, and (iii) un-doped.

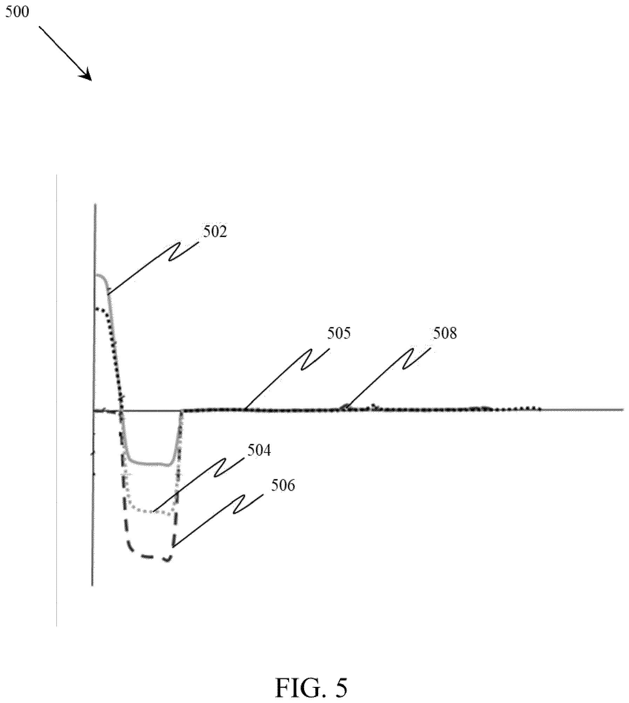

Fig. 5 is a pictorial snapshot illustrating an exemplary representation of the relative refractive index profile in accordance with an embodiment of the present disclosure.The relative refractive index profile 500 may have first through third relative refractive index profiles 502, 504, and 506, respectively. In particular, the first relative refractive index profile 502 may correspond to the relative refractive index profile of the optical fiber 101 such that the core region 402 may be an up-doped region and the primary and secondary cladding regions 404 and 406 may be down-doped regions. Moreover, the second relative refractive index profile 504 may correspond to the relative refractive index profile of the optical fiber 101 such that the core region 402 may be an un-doped silica region (i.e., the core region 402 may be manufactured from the pure silica) and the primary and secondary cladding regions 404 and 406 may be the down-doped regions. Further, the third relative refractive index profile 506 may correspond to the relative refractive index profile of the optical fiber 101 such that the core region 402 may be a co-doped region and the primary and secondary cladding regions 404 and 406 may be the down-doped regions.

In accordance with an embodiment of the present disclosure, the relative refractive index profile 500 may have an abrupt jump 508 (i.e., an abrupt change 508) in a relative refractive index of the relative refractive index profile 500. In particular, the relative refractive index profile 500 may have the abrupt jump 508 in the relative refractive index at an interface 505 of the primary cladding region 404 and the secondary cladding region 406. The abrupt jump in the relative refractive index at the interface 505 may be defined as an increase or decrease (i.e., a discontinuity in the relative refractive index profile with respect to the adjacent cladding regions 404 and 406) in relative refractive index with respect to pure silica. The relative refractive index at the interface 505 may be in a range of -0.05% to 0.05%.

In accordance with an embodiment of the present disclosure, the relative refractive index at the interface 505 is greater than a relative refractive index of the secondary cladding region 406. The relative refractive index at the interface 505 is less than the relative refractive index of the secondary cladding region 406. In some aspects of the present disclosure, the relative refractive index at the interface 505 is greater than a relative refractive index of the primary cladding region 404. In some aspects of the present disclosure, the relative refractive index at the interface 505 is less than a relative refractive index of the primary cladding region 404.

In accordance with an embodiment of the present disclosure, the relative refractive index profile 500 may have a cladding relative refractive index profile. In particular, the primary cladding region 404 may have the cladding relative refractive index profile. The cladding relative refractive index profile may have at least one down doped region that may be disposed on one of, (i) an inner region and (ii) an outer region. Aspects of the present disclosure are intended to include and/or otherwise cover drawing of the optical fiber 101 having any type of relative refractive index profile 500.

In accordance with an embodiment of the present disclosure, stacking glass sub-preforms with a specific Old ratio inside a silica glass tube, ensuring minimal OH diffusion at mating portions. The ability to withstand high furnace temperatures, enabling continuous drawing and reducing abrupt changes in bare fiber diameter near joints.

In accordance with an embodiment of the present disclosure, the synergy lies in the combination of stacking glass sub-preforms with an optimized Old ratio inside a carefully chosen silica glass tube. This arrangement minimizes OH diffusion at mating portions, ensuring a smooth drawing process even at high temperatures, ultimately resulting in continuous optical fiber production.

In accordance with an embodiment of the present disclosure, the method's efficacy has its application in large-scale optical fiber production, where continuous drawing is vital. The reduced preform changeover time and improved control over impurity diffusion make it suitable for high-throughput manufacturing.

In accordance with an embodiment of the present disclosure, the method's innovative aspects cover a broad range of applications, addressing key parameters such as glass material selection, stacking technique, and furnace temperature control. The proposed approach ensures a continuous draw process with minimal OH diffusion, making it versatile for various optical fiber production scenarios.

Advantageously, the apparatus 100 may facilitate increase in production volume and reduction in cost because of multiple preforms loaded together without any time spent on welding and cooling the joint. By virtue of stacking of the glass sub-preforms 114, there is no need for welding and cooling the joint of the multiple preforms which increases the production volume and reduces the cost and time. The apparatus 100 may facilitate changeover time and furnace ramping up and ramping down time. Further, the apparatus 100 facilitate stacking of the glass sub-preforms 114 such that the mating portion at the second end 128 of the previous glass sub-preform and the first end 126 of the successive glass sub-preform has negligible hydroxide (OH) ion. The mating portion at the second end 128 of the previous glass sub-preform and the first end 126 of the successive glass sub-preform has hydroxide (OH) ion less than 1 ppm. The apparatus 100 requires a low-quality clad tube i.e., the hollow cylindrical glass tube 108 which saves huge production costs.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method (300) for drawing an optical fiber (101), **characterized in that** steps of:
stacking (302) at least two glass sub-preforms of a plurality of glass sub-preforms (114a-114n) inside a hollow cylindrical glass tube (108) to form a master glass preform (130) such that the master glass preform (130) comprises a top end (132) and a bottom end (134),
wherein each of the at least two glass sub-preforms is defined by a first end (126) and a second end (128), where the first end (126) of a successive glass sub-preform is stacked on the second end (128) of a previous glass sub preform such that the successive glass sub-preform rests on the previous glass sub-preform; and
melting (304) the bottom end (134) of the master glass preform (130) in a furnace (110) to draw an optical fiber (101), where a temperature of the furnace (110) is at least 1650° C, where the optical fiber (101) is drawn continuously.

2. The method (300) as claimed in claim 1, wherein each of the at least two glass sub-preforms has a solid cylindrical shape such that each of the at least two glass sub-preforms has a clad diameter (D) and a core diameter (d), where a ratio of the clad diameter (D) to the core diameter (d) is greater than 8.

3. The method (300) as claimed in claim 1, wherein the hollow cylindrical glass tube (108) is made up of a silica material with greater than 0.1% of metallic impurity and one or more glass core and one or more glass cladding is made of silica with less than 0.1% metallic impurity.

4. The method (300) as claimed in claim 1, wherein the hollow cylindrical glass tube (108) is made up of a type 2 silica material and each of the at least two glass sub-preforms is made up of a type 3 silica material.

5. The method (300) as claimed in claim 1, wherein for forming the master glass preform (130), the method comprising collapsing the at least two glass sub-preforms of the plurality of glass sub-preforms (114a-114n) and the hollow cylindrical glass tube (108) in the furnace (110).

6. The method (300) as claimed in claim 1, wherein a mating portion at the second end (128) of the previous glass sub-preform and the first end (126) of the successive glass sub-preform has a hydroxide (OH) infusion of less than 1 parts per million (ppm).

7. The method (300) as claimed in claim 1, wherein to form the at least two glass sub-preforms comprising:
depositing a cladding layer of a silica soot on a core rod by way of an outside vapor deposition (OVD) technique to form a soot preform; and
sintering the soot preform in a sintering furnace to manufacture each of the at least two glass sub-preforms.

8. The method (300) as claimed in claim 1, wherein to form the at least two glass sub-preforms comprising:
stacking one or more core rods inside one or more cladding tubes to form a glass sub-preform assembly; and
collapsing the glass sub-preform assembly to form the at least two glass sub-preforms.

9. The method (300) as claimed in claim 1, wherein the optical fiber (101) has an outer glass diameter that is in a range between 60 microns (µm) and 125 µm with a tolerance value of ± 0.7 µm.

10. The method (300) as claimed in claim 1, wherein the optical fiber (101) comprises a core region (402), a primary cladding region (404), and a secondary cladding region (406), where a core radius of the core region (402) is in a range between 4 µm and 5 µm, a primary cladding radius of the primary cladding region (404) is in a range between 20 µm and 55 µm, and a secondary cladding radius of the secondary cladding region (406) is in a range between 30 µm and 63 µm.

11. The method (300) as claimed in claim 1,wherein the optical fiber (101) is defined by a relative refractive index profile (500) such that an interface (505) of the primary cladding region (404) and the secondary cladding region (406) has an abrupt change (508) in a relative refractive index.

12. The method (300) as claimed in claim 1, wherein the second end (128) of the previous glass sub-preform and the first end (126) of the successive glass sub-preform are of a flat circular shape.

13. The method (300) as claimed in claim 1, wherein the hollow cylindrical glass tube (108) has a tube length (L1) that is in a range between 5 meters (m) and 10 m, an outer diameter (D1) that is in a range between 100 millimeters (mm) and 200 mm, and an inner diameter (D2) that is in a range between 70 mm and 180 mm, where each of the at least two glass sub-preforms has a preform length (L2) that is in a range between 1 m and 3 m and a clad diameter (D) is in a range between 65 mm and 175 mm.

14. The method (300) as claimed in claim 9, wherein the core region (402) is formed from one of, (i) un-doped silica material, (ii) a co-doped silica material, and (iii) an up-doped silica material.

15. The method (300) as claimed in claim 9, wherein the primary cladding region (404) comprising a cladding relative refractive index profile that has at least one down doped region disposed on one of, (i) an inner region and (ii) an outer region.
